(19) Europäisches Patentamt
European Patent Office
Office européen des brevets

(11) Veröffentlichungsnummer: **0 012 351**
**B1**

(12) # EUROPÄISCHE PATENTSCHRIFT

(45) Veröffentlichungstag der Patentschrift: **07.07.82**

(51) Int. Cl.³: **C 07 F 9/40**, C 08 G 79/04, B 01 F 17/00, D 06 P 1/667

(21) Anmeldenummer: **79104937.2**

(22) Anmeldetag: **05.12.79**

(54) **Phosphonsäureester, ihre Herstellung, ihre Verwendung als Emulgier- und Dispergiermittel und ihre wässrigen Zubereitungen.**

(30) Priorität: **14.12.78 DE 2853936**

(43) Veröffentlichungstag der Anmeldung: **25.06.80 Patentblatt 80/13**

(45) Bekanntmachung des Hinweises auf die Patenterteilung: **07.07.82 Patentblatt 82/27**

(84) Benannte Vertragsstaaten: **BE CH DE FR GB IT NL**

(56) Entgegenhaltungen:
EP-A-0 000 125
FR-A-1 236 270
FR-A-2 197 044
US-A-3 298 967
US-A-3 864 156
US-A-3 943 198
US-A-3 956 431

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Nonn, Konrad, Dr., Otto-Stange-Strasse 17, D-5090 Leverkusen (DE)**
Erfinder: **Walz, Klaus, Dr., Domblick 4, D-5090 Leverkusen 31 (DE)**
Erfinder: **Wolf, Karlheinz, Dr., Paul-Klee-Strasse 77, D-5090 Leverkusen (DE)**
Erfinder: **Boehmke, Günther, Dr., Kurt-Schumacher-Ring 152, D-5090 Leverkusen (DE)**

EP 0 012 351 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Phosphonsäureester, ihre Herstellung, ihre Verwendung als Emulgier- und Dispergiermittel und ihre wässrigen Zubereitungen

Gegenstand der Erfindung sind Phosphonsäureester der allgemeinen Formel

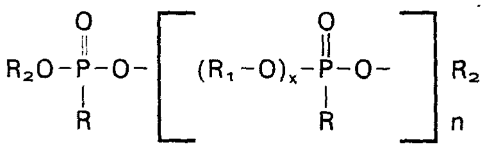 (I)

in der

R für einen $C_{12}$-$C_{22}$-Alkyl- oder -Alkenylrest, einen $C_7$-$C_{19}$-Aralkylrest oder für einen Rest der Formel $-R_4-O-CO-R_5$ oder $-R_4-COO-R_5$ steht, wobei $R_4$ einen gegebenenfalls durch $-COOR_5$ oder $-CH_2-OCO-R_5$ substituierten $C_2$-$C_4$-Alkylenrest und $R_5$ einen $C_6$-$C_{22}$-Alkyl- oder -Alkenylrest oder einen gegebenenfalls durch $C_1$-$C_4$-Alkyl substituierten Cyclopentyl-, Cyclohexyl-, Tetrahydronaphthyl- oder Abietylrest bedeuten,

$R_1$ für den Äthylen- und/oder 1,2-Propylenrest,

$R_2$ Wasserstoff, $C_1$-$C_4$-Alkyl oder $-(R_1-O)_{x-1}R_1-R_3$,

$R_3$ für OH, Cl oder Br,

x für ganze Zahlen von 2-100, und

n für 1-10 stehen,

ein Verfahren zu ihrer Herstellung, ihre Verwendung als Emulgier- und Dispergiermittel, insbesondere in Farbstoffzubereitungen, und die Phosphonsäureester und wasserunlösliche Farbstoffe enthaltende wässrige Zubereitungen.

Geeignete Aralkylreste sind beispielsweise der Benzyl- oder Phenyläthylrest und ihre im Benzolring durch $C_1$-$C_{12}$-Alkylreste substituierten Derivate wie Methylbenzyl oder Dodecylbenzyl. Als Reste R seien beispielsweise der n-Dodecyl-, n-Tetradecyl-, n-Hexadecyl-, n-Octadecyl-, n-Eikosyl-, n-Behenyl-, Undecenyl- oder Oleylrest genannt. Als Reste $R_4$ seien beispielsweise der 1,1-Äthylen-, 1,2-Äthylen-, 1,2-Propylen-, 1,3-Propylen-, 1,1-Isobutylen-, 1,2-Butylen- oder 1,4-Butylenrest genannt.

Geeignete Reste $R_5$ sind beispielsweise der n-Hexyl-, n-Octyl-, n-Decyl-, n-Undecyl-, n-Dodecyl-, n-Pentadecyl-, n-Heptadecyl-, n-Octadecyl-, 2-Äthylhexyl-, Undecenyl-, Heptadecenyl- oder Octadecenylrest oder ein gegebenenfalls durch $C_1$-$C_4$-Alkyl substituierter Cyclohexyl-, Tetrahydronaphthyl- oder Abietylrest.

Die erfindungsgemässen Phosphonsäureester der Formel I werden hergestellt, indem man niedere Alkylester, Arylester oder Halogenide von Phosphonsäuren der Formel

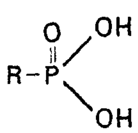 (II)

in der

R die in Formel I angegebene Bedeutung besitzt, mit Polyglykolverbindungen der Formel

$$HO-(R_1-O)_x-H \qquad (III)$$

und gegebenenfalls zusätzlich mit Polyglykolverbindungen der Formel

$$Hal-(R_1-O)_x-H \qquad (IIIa)$$

in denen

$R_1$ und x die in Formel I angegebene Bedeutung haben, und

Hal für Chlor oder Brom steht,

umsetzt, oder niedere Alkylester der Phosphonsäuren der Formel II mit Verbindungen der Formel

$$Hal-(R_1-O)_{x-1}-R_1-Hal \qquad (IV)$$

umsetzt, wobei

$R_1$ und x die in Formel I angegebene Bedeutung besitzen, und

Hal für Chlor oder Brom steht.

Unter niederen Alkylestern werden die Methyl-, Äthyl-, Propyl-, Isopropyl-, Butyl- oder Isobutylester, insbesondere die Methyl- und Äthylester verstanden. Geeignete Arylester sind insbesondere die Phenyl- oder Kresylester. Als Säurehalogenide von Phosphonsäuren der Formel II kommen insbesondere die Chloride oder Bromide in Betracht.

Die Umsetzung wird zweckmässig in der Weise durchgeführt, dass man die niedrigen Alkylester oder Arylester der Phosphonsäuren der Formel II und die Verbindungen der Formel III im Molverhältnis 1: 0,5 bis 1: 3, vorzugsweise 1: 0,8 bis 1: 1,6, vermischt und auf Temperaturen von 150 bis 220° C, vorzugsweise 170 bis 200° C, erhitzt. Der entstandene niedere Alkohol bzw. das entstehende Phenol wird gegebenenfalls unter Vakuum aus dem Reaktionsgemisch kontinuierlich entfernt. Entsprechend wird verfahren, wenn an Stelle der Hydroxyverbindungen der Formel III Halogenverbindungen der Formel IV eingesetzt werden. Entstehende Alkylhalogenide werden ebenfalls kontinuierlich aus dem Reaktionsgemisch abdestilliert. Zur Beschleunigung der Reaktion können Katalysatoren oder Lösungsmittel wie Alkoholate, Triphenylphosphin oder Dimethylformamid zugesetzt werden.

Die erfindungsgemässen Phosphonsäureester der Formel I lassen sich auch dadurch herstellen, dass man Chloride oder Bromide der Phosphonsäuren der Formel II mit den Verbindungen der Formel III bei 20 bis 200° C, vorzugsweise 20 bis 120° C, umsetzt. Die Umsetzung kann gegebenenfalls in Gegenwart von säurebindenden Mitteln und/oder von inerten organischen Lösungsmitteln durchgeführt werden.

Als den erfindungsgemässen Phosphonsäureestern der Formel I zugrunde liegende Phosphonsäuren der Formel II seien beispielsweise genannt:

1-Dodecanphosphonsäure,
1-Tetradecanphosphonsäure,
2-Tetradecanphosphonsäure,
1-Octadecanphosphonsäure,
1-Eikosanphosphonsäure,

1-Octadecenphosphonsäure,
Benzylphosphonsäure,
Phenyläthylphosphonsäure,
Butylbenzylphosphonsäure,
Dodecylbenzylphosphonsäure,
2-Octanoyloxyäthan-1-phosphonsäure,
2-Dodecanoyloxyäthan-1-phosphonsäure,
2-Hexadecanoyloxyäthan-1-phosphonsäure,
2-Octadecanoyloxyäthan-1-phosphonsäure,
2-Eikosanoyloxyäthan-1-phosphonsäure,
2-Octadecenoyloxyäthan-1-phosphonsäure,
2-Dodecanoyloxypropran-1-phosphonsäure,
3-Dodecanoyloxypropan-1-phosphonsäure,
2,2-Bis-(dodecanoyloxymethyl)äthan-1-phosphonsäure,
2-Octyloxycarbonyläthan-1-phosphonsäure,
2-Dodecyloxycarbonyläthan-1-phosphonsäure,
2-Octadecyloxycarbonyläthan-1-phosphonsäure,
2-Eikosyloxycarbonyläthan-1-phosphonsäure,
2-Octadecenyloxycarbonyläthan-1-phosphonsäure,
2-Dodecyloxycarbonylpropan-1-phosphonsäure,
2,3-Bis-(decyloxycarbonyl)-propan-1-phosphonsäure,
2,3-Bis-(dodecyloxycarbonyl)propan-1-phosphonsäure.

Geeignete Polyglykolverbindungen der Formel III sind beispielsweise Diäthylenglykol, Tetraäthylenglykol, Hexaäthylenglykol, Octaäthylenglykol, Dodecaäthylenglykol, Tripropylenglykol, Umsetzungsprodukte von Tripropylenglykol mit 8 oder 12 mol Äthylenoxid.

Bevorzugte erfindungsgemässe Verbindungen werden hergestellt, indem man Dimethyl- oder Diäthylester von Phosphonsäuren der Formel

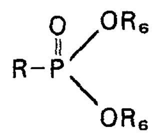 (V)

in der

R die obengenannte Bedeutung besitzt, und
$R_6$ für Methyl oder Äthyl steht,
mit Polyglykoläthern der Formel

$$HO-(CH_2CH_2-O)_y-H \quad \text{oder}$$

$$Cl-(CH_2-CH_2-O)_{y-1}-CH_2-CH_2-Cl$$

umsetzt, wobei

y für ganze Zahlen von 2 bis 50, insbesondere von 4 bis 20 steht.

Besonders bevorzugte Verbindung werden erhalten, wenn man Dimethyl- oder Diäthylester von Phosphonsäuren der Formel

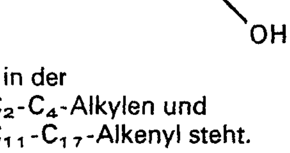 (VI)

einsetzt, in der
$R_4'$ für $C_2$-$C_4$-Alkylen und
$R_5'$ für $C_{11}$-$C_{17}$-Alkenyl steht.

Bevorzugte erfindungsgemässe Farbstoffzubereitungen sind wässrige Dispersionen, die wasserunlösliche Farbstoffe und Phosphonsäureester der Formel I enthalten. Sie werden zum Pigmentieren natürlicher und synthetischer Materialien verwendet.

Als wasserunlösliche Farbstoffe kommen bevorzugt Pigmente, aber auch Dispersionsfarbstoffe und optische Aufheller in Frage.

Als Pigmente können organische Pigmente, z.B. Pigmente der Azo-, Anthrachinon-, Azaporphin-, Thioindigo- oder polycyclischen Reihe von Chinacridon-, Dioxazin-, Naphthalintetracarbonsäure- oder Perylentetracarbonsäurepigmente, wie sie aus „Colour-Index", 3. Auflage, (1971), Bd. 3, S. 3272-3390, bekannt sind, insbesondere anorganische Pigmente wie Zinksulfide, Cadmiumsulfide oder -selenide, Ultramarin, Titandioxid, Eisenoxide, Nickel- oder Chromtitangelb, Chromoxide, Chromatpigmente und Russ sowie deren Mischungen verwendet werden.

Die Dispersionsfarbstoffe gehören beispielsweise der Azo-, Anthrachinon-, Methin-, Chinophthalon- oder Aminocumarinreihe an, wie sie in „Colour-Index", 3. Auflage, Bd. 2, (1971), S. 2483-2741 aufgeführt sind.

In Wasser schwer lösliche optische Aufheller gehören beispielsweise der Cumarin-, Stilben-, Naphthalimid- oder Carbostyrylreihe an.

Weiterhin sind als wasserunlösliche Farbstoffe solche zu nennen, die bei 160 bis 220° C sublimieren und üblicherweise im Transferdruck verwendet werden, sowie sublimierbare Carbinolbasen und Carbinolbasenderivate von kationischen Farbstoffen.

Die erfindungsgemässen Farbstoffdispersionen enthalten 20 bis 75%, vorzugsweise 30 bis 70% Farbstoff, 1 bis 20%, vorzugsweise 2 bis 10% Phosphonsäureester, 0 bis 20%, vorzugsweise 2 bis 10% nichtionogene und/oder anionische Tenside, 0 bis 25% Wasserrückhaltemittel wie Polyglykole, 0 bis 2% Konservierungsmittel wie formaldehydabspaltende Mittel und 3 bis 50% Wasser, wobei sich die Zahlenangaben auf die Farbstoffdispersion beziehen.

Aus FR-A Nr. 2197044 und US-A Nr. 3956431 sind polymere Phosphorsäureester bekannt, deren Phosphoratome wie die der erfindungsgemässen Verbindungen (I) durch eine Polyätherbrücke getrennt sind. Der mit den Phosphoratomen verbundene einwertige Rest stellt einen gegebenenfalls halogenierten Kohlenwasserstoffrest dar. Nach den Beispielen steht dieser Rest ausschliesslich für Methyl oder Äthyl. Überraschenderweise zeigte sich, dass die neuen Phosphorsäureester den nächstvergleichbaren bekannten Estern darin überlegen sind, dass sie Pigmenteinstellungen eine bedeutend niedrigere Viskosität verleihen.

*Beispiel 1*

308 Teile 2-Lauroyloxyäthanphosphonsäuredimethylester und 337 Teile Octaäthylenglykol werden vermischt und innerhalb von 1 h bei einem Vakuum von 90 bis 100 Torr auf 160° C erhitzt. Das sich bildende Methanol wird über einen Kühler in

eine eisgekühlte Vorlage abdestilliert. Mit nachlassender Methanolabspaltung wird die Temperatur langsam auf 180 bis 185° C erhöht und der Ansatz 10 h bei dieser Temperatur gehalten. Nach dem Abkühlen werden 580 Teile eines klar wasserlöslichen Phosphonesters als blassgelbe Flüssigkeit erhalten.

P-Gehalt: 4,8% Molgewicht: 1150
Oberflächenspannung einer 0,1 %igen wässrigen Lösung: 31 dyn/cm $n_D^{20}$: 1,4643

*Beispiel 2*

In der in Beispiel 1 angegebenen Weise werden 752 Teile 2-Octadecenoyloxyäthanphosphonsäuredimethylester und 663 Teile Octaäthylenglykol bei 180 bis 185° C umgesetzt. Es werden 1,140 Teile eines Phosphonsäureesters als wasserlösliche, braune Flüssigkeit erhalten.

P-Gehalt: 3,9% $n_D^{20}$: 1,4698
Oberflächenspannung einer 0,1 %igen wässrigen Lösung: 37,5 dyn/cm

*Beispiel 3*

In der in Beispiel 1 beschriebenen Weise werden 102 Teile 1-Dodecanphosphonsäuredimethylester bei 180 bis 200° C mit 123 Teilen Octaäthylenglykol umgesetzt. Es werden 210 Teile eines wasserlöslichen Phosphonats als gelbe Flüssigkeit erhalten.

P-Gehalt: 5,2%
Oberflächenspannung einer 0,1 %igen wässrigen Lösung: 33,0 dyn/cm

*Beispiel 4*

508 Teile Phosphonobernsteinsäuretetramethylester, 372 Teile Dodecylalkohol und 470 Teile Octaäthylenglykol werden vermischt und langsam auf 160 bis 170° C erhitzt. Unter vermindertem Druck (90 bis 100 Torr) werden dann innerhalb von 12 h 165 Teile Methanol abdestilliert, wobei die Temperatur auf 180-185° C erhöht wird. Es werden 1,450 Teile eines wasserlöslichen Phosphonsäureesters als hellbraune Flüssigkeit erhalten.

P-Gehalt: 4,8% $n_D^{20}$: 1,4666
Oberflächenspannung einer 0,1 %igen wässrigen Lösung: 32,0 dyn/cm

*Beispiel 5*

162 Teile 2-Lauroyloxyäthanphosphonsäuredimethylester und 196 Teile eines Polyglykoläthers, der durch Austausch der endständigen Hydroxylgruppen von Octaäthylenglykol gegen Chlor mit Hilfe von Thionylchlorid hergestellt wurde, werden mit 75 Teilen Dimethylformamid vermischt und 20 h auf 160 bis 170° C erhitzt. Das sich bildende Methylchlorid wird kontinuierlich aus dem Reaktionsgemisch entfernt. Anschliessend werden bei 2 Torr alle flüchtigen Bestandteile entfernt. Es werden 349 Teile eines wasserlöslichen Phosphonesters als dunkelbraune Flüssigkeit erhalten.

P-Gehalt: 4,4% Molgewicht: 1100

*Beispiel 6*

336 Teile 2-Lauroyloxyäthanphosphonsäuredimethylester und 546 Teile Dodecaäthylenglykol werden in der in Beispiel 1 beschriebenen Weise umgesetzt. Es werden 827 Teile eines klar wasserlöslichen Phosphonsäureesters als braune, viskose Flüssigkeit erhalten.

P-Gehalt: 3,9% $n_D^{20}$: 1,4677
Oberflächenspannung einer 0,1 %igen wässrigen Lösung: 31 dyn/cm

*Beispiel 7*

In der in Beispiel 4 beschriebenen Weise werden 268 Teile Oleylalkohol, 254 Teile Phosphonobernsteinsäuretetramethylester und 370 Teile Octaäthylenglykol umgesetzt. Es werden 780 Teile eines wasserlöslichen Phosphonsäureesters als braune, viskose Flüssigkeit erhalten.

P-Gehalt: 3,9% $n_D^{20}$: 1,4708
Oberflächenspannung einer 0,1 %igen wässrigen Lösung: 38,5 dyn/cm

*Beispiel 8*

Eine Mischung, bestehend aus 57 Gew.% Eisenoxidgelbpigment, das überwiegend gefälltes Eisenhydroxid vom Goethit-Typ enthält, 4 Gew.% des nach Beispiel 1 hergestellten Phosphonats, 2 Gew.% eines Additionsprodukts von Nonylphenol und 7 mol Äthylenoxid, 1 Gew.% Natriumlignisulfonat, 0,2 Gew.% Pentachlorphenolnatrium, 15 Gew.% Äthylenglykol und 20,8 Gew.% Wasser, wird mit einem Schnellrührer homogenisiert. Anschliessend wird über einen Einwalzenstuhl abgemahlen. Man erhält eine gelbe, fliessfähige Pigmentdispersion, die in wässrigen Dispersionsanstrichfarben leicht verteilbar ist.

*Beispiel 9*

Eine Mischung aus 70 Gew.% Titandioxidpigment (Rutil-Typ) 5 Gew.% des nach Beispiel 1 hergestellten Phosphonats, 0,5 Gew.% einer hochmolekularen Kieselsäure zur Verhinderung des Sedimentierens des Pigments im Teig, 0,2 Gew.% Pentachlorphenolnatrium, 15 Gew.% Äthylenglykol und 9,3 Gew.% Wasser werden im Dissolver angeschlagen. In der weissen, fliessfähigen Dispersion wird nach sechsmonatiger Lagerung bei Raumtemperatur keine Agglomeratbildung des Pigments beobachtet. Mit ähnlichem Erfolg können an Stelle des Phosphonats gemäss Beispiel 1 die in den Beispielen 2, 5, 6 oder 7 beschriebenen Produkte verwendet werden.

*Beispiel 10*

Eine Mischung aus 71 Gew.% Chromoxidgrünpigment, 4 Gew.% des nach Beispiel 3 hergestellten Phosphonats, 1,5 Gew.% Natriumligninsulfonat, 0,2 Gew.% Pentachlorphenolnatrium, 10 Gew.% Äthylenglykol und 13,3 Gew.% Wasser wird wie in Beispiel 8 gemahlen. Man erhält eine grüne Dispersion, die durch Einrühren in handelsüblichen, wässrigen Fassadenfarben gut verteilbar ist.

*Beispiel 11*

Eine Mischung aus 35 Gew.% Farbruss,

10 Gew.% des nach Beispiel 2 hergestellten Phosphonats, 0,2 Gew.% Pentachlorphenolnatrium, 15 Gew.% Äthylenglykol und 39,8 Gew.% Wasser wird mit dem Schnellrührer homogenisiert und anschliessend in einer schnellaufenden Rührwerkskugelmühle mit Glasperlen von 0,3 bis 0,4 mm Durchmesser gemahlen, bis die Teilchengrösse kleiner als 2 μ ist. Die schwarze, farbstarke Dispersion eignet sich vorzüglich zum Abtönen oder Abtrüben wässriger Dispersionsanstrichfarben.

*Beispiel 12*

Eine Mischung aus 40 Gew.% C.I. Pigment Yellow 3 (C.I. 11710), 8 Gew.% des nach Beispiel 4 hergestellten Phosphonats, 5 Gew.% eines Adduktes aus Nonylphenol und 10 mol Äthylenoxid, 0,4 Gew.% Pentachlorphenolnatrium, 20 Gew.% Äthylenglykol und 26,6 Gew.% Wasser wird wie in Beispiel 11 in einer Rührwerkskugelmühle gemahlen. Diese gelbe, nicht sedimentierende Pigmentdispersion eignet sich hervorragend zum Abtönen weisser, wässriger Dispersionanstrichfarben, wie sie zum Innenanstrich von Gebäuden verwendet werden.

**Patentansprüche**

1. Phosphonsäureester der allgemeinen Formel

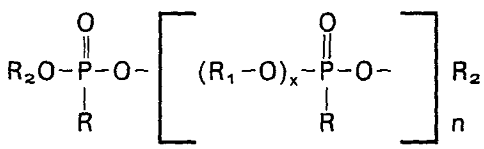

in der

R für einen $C_{12}$-$C_{22}$-Alkyl- oder -Alkenylrest, einen $C_7$-$C_{19}$-Aralkylrest oder für einen Rest der Formel $-R_4-O-CO-R_5$ oder $-R_4-COO-R_5$ steht, wobei $R_4$ einen gegebenenfalls durch $-COOR_5$ oder $-CH_2-OCO-R_5$ substituierten $C_2$-$C_4$-Alkylenrest und $R_5$ einen $C_6$-$C_{22}$-Alkyl- oder -Alkenylrest oder einen gegebenenfalls durch $C_1$-$C_4$-Alkyl substituierten Cyclopentyl-, Cyclohexyl-, Tetrahydronaphthyl- oder Abietylrest bedeuten,

$R_1$ für den Äthylen- und/oder 1,2-Propylenrest,

$R_2$ Wasserstoff, $C_1$-$C_4$-Alkyl oder $-(R_1-O)_{x-1}R_1-R_3$,

$R_3$ für OH, Cl oder Br,

x für ganze Zahlen von 2 bis 100, und

n für 1 bis 10 stehen.

2. Phosphonsäureester nach Anspruch 1, dadurch gekennzeichnet, dass sie durch Umsetzung von Phosphonsäureestern der allgemeinen Formel

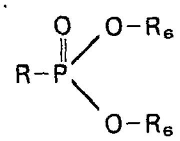

worin

R die in Anspruch 1 angegebende Bedeutung hat, und

$R_6$ für Methyl oder Äthyl steht,

mit Polyglykoläthern der allgemeinen Formel

$$HO-(CH_2-CH_2-O)_y-H \quad \text{oder}$$

$$Cl-(CH_2-CH_2-O)_{y-1}-CH_2-CH_2-Cl$$

worin

y für ganze Zahlen von 2 bis 50 steht, erhalten worden sind.

3. Phosphonsäureester nach Anspruch 2, dadurch gekennzeichnet, dass sie durch Umsetzung von Phosphonsäureestern der allgemeinen Formel

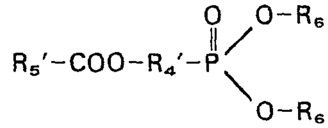

worin

$R_6$ die in Anspruch 2 angegebene Bedeutung hat,

$R_4'$ für $C_2$-$C_4$-Alkylen, und

$R_5'$ für $C_{11}$-$C_{17}$-Alkenyl stehen, erhalten worden sind.

4. Verfahren zur Herstellung von Phosphonsäureestern des Anspruchs 1, dadurch gekennzeichnet, dass man niedere Alkylester, Arylester oder Halogenide von Phosphonsäuren der allgemeinen Formel

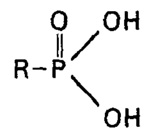

worin

R die in Anspruch 1 angegebene Bedeutung hat, mit Polyglykoläthern der allgemeinen Formel

$$HO-(R_1-O)_x-H$$

und gegebenenfalls zusätzlich mit Polyglykoläthern der allgemeinen Formel

$$Hal-(R_1-O)_x-H$$

oder dass man niedere Alkylester der Phosphonsäuren mit Polyglykoläthern der allgemeinen Formel

$$Hal-(R_1-O)_{x-1}-R_1-Hal$$

worin

$R_1$ und x die in Anspruch 1 angegebene Bedeutung hat, und

Hal für Chlor oder Brom steht, umsetzt.

5. Verwendung von Phosphonsäureestern des Anspruchs 1 als Emulgier- und Dispergiermittel.

6. Verwendung von Phosphonsäureestern des Anspruchs 1 als Dispergiermittel in Farbstoffzubereitungen.

7. Wässrige Zubereitungen enthaltend Phosphonsäureester des Anspruchs 1 und wasserunlösliche Farbstoffe.

## Claims

1. Phosphonic acid esters of the general formula

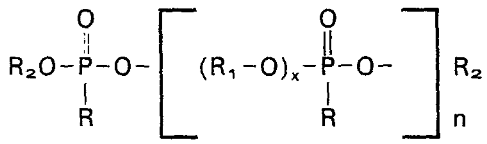

in which

R represents a $C_{12}$-$C_{22}$-alkyl or -alkenyl radical, a $C_7$-$C_{19}$-aralkyl radical or a radical of the formula $-R_4-O-CO-R_5$ or $-R_4-COO-R_5$, wherein

$R_4$ denotes a $C_2$-$C_4$-alkylene radical optionally substituted by $-COOR_5$ or $-CH_2-OCO-R_5$ and

$R_5$ denotes a $C_6$-$C_{22}$-alkyl or -alkenyl radical or a cyclopentyl, cyclohexyl, tetrahydronaphthyl or abietyl radical which is optionally substituted by $C_1$-$C_4$-alkyl,

$R_1$ represents the ethylene and/or 1,2-propylene radical,

$R_2$ represents hydrogen, $C_1$-$C_4$-alkyl or $-(R_1-O)_{x-1}R_1-R_3$,

$R_3$ represents OH, Cl or Br,

x represents an integer from 2 to 100 and

n represents a number from 1 to 10.

2. Phosphonic acid esters according to Claim 1, characterised in that they have been obtained by reacting phosphonic acid esters of the general formula

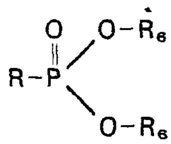

wherein

R has the meaning indicated in Claim 1 and

$R_6$ represents methyl or ethyl,

with polyglycol ethers of the general formula

$$HO-(CH_2-CH_2-O)_y-H \quad \text{or}$$
$$Cl-(CH_2-CH_2-O)_{y-1}-CH_2-CH_2-Cl$$

wherein

y represents an integer from 2 to 50.

3. Phosphonic acid esters according to Claim 1, characterised in that they have been obtained by reacting phosphonic acid esters of the general formula

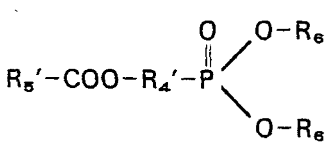

wherein

$R_6$ has the meaning indicated in Claim 2,

$R_4'$ represents $C_2$-$C_4$-alkylene and

$R_5'$ represents $C_{11}$-$C_{17}$-alkenyl.

4. Process for the preparation of the phosphonic acid esters of Claim 1, characterised in that lower alkylesters, arylesters or halides of phosphonic acids of the general formula

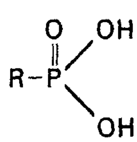

wherein

R has the meaning indicated in Claim 1, are reacted with polyglycolethers of the general formula

$$HO-(R_1-O)_x-H$$

and, if appropriate, also with polyglycolethers of the general formula

$$Hal-(R_1-O)_x-H$$

or in that lower alkylesters of the phosphonic acids are reacted with polyglycolethers of the general formula

$$Hal-(R_1-O)_{x-1}-R_1-Hal$$

wherein

$R_1$ and x have the meaning indicated in Claim 1 and

Hal represents chlorine or bromine.

5. Use of the phosphonic acid esters of Claim 1 as emulsifying agents and dispersing agents.

6. Use of the phosphonic acid esters of Claim 1 as dispersing agents in dyestuff formulations.

7. Aqueous formulations containing phosphonic acid esters of Claim 1 water-insoluble dyestuffs.

## Revendications

1. Esters d'acides phosphoniques de formule générale:

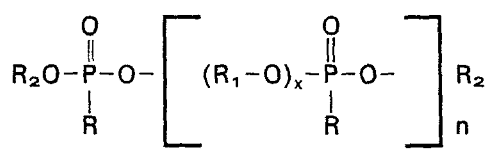

dans laquelle

R représente un radical alcoyle ou alcényle en $C_{12}$-$C_{22}$, un radical aralcoyle en $C_7$-$C_{19}$ ou un radical de formule $-R_4-O-CO-R_5$ ou $-R_4-COO-R_5$, $R_4$ signifiant un radical alcoylène en $C_2$-$C_4$ éventuellement substitué par $-COOR_5$ ou $-CH_2-OCO-R_5$ et $R_5$ représente un radical alcoyle ou alcényle en $C_6$-$C_{22}$ ou un radical cyclopentyle, cyclohexyle, tétrahydronaphtyle ou abiétyle éventuellement substitué par un alcoyle en $C_1$-$C_4$,

$R_1$ représente le radical éthylène et/ou 1,2-propylène,

$R_2$ de l'hydrogène, un alcoyle en $C_1$-$C_4$ ou $-(R_1-O)_{x-1}-R_1-R_3$,

$R_3$ OH, Cl ou Br,

x des nombres entiers de 2 à 100, et

n 1 à 10.

2. Esters d'acides phosphoniques selon la revendication 1, caractérisés en ce qu'ils sont obtenus par réaction d'esters d'acides phosphoniques de formule générale:

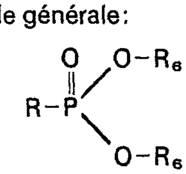

dans laquelle

R a la signification indiquée à la revendication 1, et

$R_6$ représente un méthyle ou éthyle,

avec des éthers polyglycoliques de formule générale:

$$HO-(CH_2-CH_2-O)_y-H \quad \text{ou}$$

$$Cl-(CH_2-CH_2-O)_{y-1}-CH_2-CH_2-Cl$$

où

y représente des nombres entiers de 2 à 50.

3. Esters d'acides phosphoniques selon la revendication 2, caractérisés en ce qu'ils sont obtenus par réaction d'esters d'acides phosphoniques de formule générale:

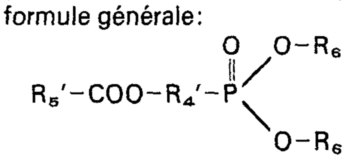

dans laquelle

$R_6$ a la signification indiquée à la revendication 2,

$R_4'$ représente un alcoylène en $C_2$-$C_4$, et

$R_5'$ un alcényle en $C_{11}$-$C_{17}$.

4. Procédé de fabrication d'esters d'acides phosphoniques selon la revendication 1, caractérisé en ce qu'on fait réagir des esters alcoylés inférieurs, des esters arylés ou des halogénures d'acides phosphoniques de formule générale:

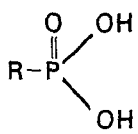

dans laquelle

R a la signification indiquée à la revendication 1, avec des éthers polyglycoliques de formule générale:

$$HO-(R_1-O)_x-H$$

et éventuellement en plus avec des éthers polyglycoliques de formule générale:

$$Hal-(R_1-O)_x-H$$

ou en ce qu'on fait réagir des esters alcoylés inférieurs des acides phosphoniques avec des éthers polyglycoliques de formule générale:

$$Hal-(R_1-O)_{x-1}-R_1-Hal$$

dans laquelle

$R_1$ et x ont la signification indiquée à la revendication 1, et

Hal représente du chlore ou du brome.

5. Utilisation des esters d'acides phosphoniques selon la revendication 1 comme émulsifiants et dispersants.

6. Utilisation des esters d'acides phosphoniques selon la revendication 1 comme dispersants dans des préparations de colorants.

7. Préparation aqueuse contenant des esters d'acides phosphoniques selon la revendication 1 et des colorants insolubles dans l'eau.